# EUROPÄISCHE PATENTSCHRIFT

(11) **EP 3 310 456 B1**
(45) Veröffentlichungstag und Bekanntmachung des Hinweises auf die Patenterteilung: **24.04.2019**
(21) Anmeldenummer: 16728641.8
(22) Anmeldetag: 30.05.2016
(51) Int. Cl.: B01D 53/64, B01D 53/80

(54) **VERFAHREN ZUR ABSCHEIDUNG VON QUECKSILBER AUS RAUCHGASEN VON VERBRENNUNGSANLAGEN**
METHOD FOR REMOVING MERCURY FROM FLUE GASES OF INCINERATION PLANTS
PROCÉDÉ DE SÉPARATION DU MERCURE DES GAZ DE FUMÉE D'INSTALLATIONS DE COMBUSTION

(30) Priorität: 19.06.2015 DE 102015211326
(43) Veröffentlichungstag der Anmeldung: 25.04.2018
(73) Patentinhaber: RWE Power Aktiengesellschaft, 45128 Essen (DE)
(72) Erfinder: MOSER, Peter, 50859 Köln (DE); STAHL, Knut, 59071 Hamm (DE)
(74) Vertreter: KNH Patentanwälte Neumann Heine Taruttis PartG mbB
(86) Internationale Anmeldenummer: PCT/EP2016/062122
(87) Internationale Veröffentlichungsnummer: WO 2016/202563

(56) Entgegenhaltungen:
- DE-A1- 3 941 894
- DE-A1-102007 042 297
- US-A- 5 811 066
- US-B1- 6 818 043
- US-B1- 7 722 843

## Beschreibung

Die Erfindung betrifft ein Verfahren zur Abscheidung von Quecksilber aus Rauchgasen von Verbrennungsanlagen wie beispielsweise Kohlekraftwerken, Abfallverbrennungsanlagen oder dergleichen.

Wegen der relativ hohen Toxizität von Quecksilber, insbesondere von organisch gebundenem Quecksilber, das direkt oder indirekt über die Nahrungskette von Menschen aufgenommen wird, existieren relativ strenge Grenzwerte für die gesetzlich zulässigen Emissionen von Quecksilber aus Verbrennungsanlagen und Kraftwerken.

Quecksilber und Quecksilberverbindungen sind grundsätzlich ubiquitär und mehr oder weniger in allen organischen beziehungsweise fossilen Brennstoffen
gebunden. Durch Verbrennung fossiler Brennstoffe wird Quecksilber mobilisiert und gasförmig über das Abgas sowie in gelöster Form über die Abwasserströme oder in fester Form über Schlämme in die Umwelt abgegeben. Daraus ergibt sich die Notwendigkeit, Quecksilber aus dem Rauchgas von Verbrennungsanlagen auszuhalten.

Quecksilber liegt im Rauchgas von Verbrennungsanlagen und speziell im Rauchgas von Kohlekraftwerken im Wesentlichen in zwei chemischen Formen vor, nämlich als elementares Quecksilber und als oxidiertes zweiwertiges Quecksilber. In Abhängigkeit vom Quecksilber-, Halogen- und Schwefelgehalt des eingesetzten Brennstoffs und den Prozessschritten sowie Bedingungen bei der Rauchgasbehandlung bis zur Freisetzung an die Umwelt stellt sich ein bestimmtes Verhältnis der Anteile von oxidiertem und elementarem Quecksilber ein. Die Oxidationsstufe des Quecksilbers beziehungsweise des Verhältnis der Spezies ist entscheidend für die Art und Wirksamkeit einer Quecksilberabtrenntechnik. Im Gegensatz zum elementaren Quecksilber ist das oxidierte Quecksilber wasserlöslich und kann daher mittels nasser Gaswäsche, beispielsweise mittels einer nassen Rauchgasentschwefelungsanlage aus dem Rauchgas ausgewaschen werden und durch Adsorbentien oder mittels Ionenaustauscher oder organischen Fällungs- und Flockungsmitteln aus dem Prozess entfernt und in einen deponierbaren Feststoff überführt werden.

Diese Vorgehensweise ist allerdings zur Entfernung des elementaren
Quecksilbers aus dem Rauchgas nicht geeignet. Ist der Anteil an elementarem Quecksilber im Rauchgas hoch, kann beispielsweise durch Zugabe von
Oxidationsmitteln das Quecksilber in eine lösliche oxidierte Spezies überführt werden, die dann in einer nachgeschalteten nassen Rauchgaswäsche aus dem Rauchgas entfernt werden kann.

Bei Wirbelschichtkesseln mit einer Entschwefelung nach dem Trockenadditivverfahren und anderen Anlagen ohne Nasswäsche ist der Stand der Technik, Adsorbentien undotiert oder mit Bromiden oder mit Schwefel dotiert in den Rauchgasstrom einzublasen und die mit Quecksilber beladenen Adsorbentien mechanisch aus dem Rauchgasstrom abzutrennen, beispielsweise mit Gewebefiltern oder
mittels elektrostatischer Staubabscheider.

Diese Verfahren der trockenen Flugstromadsorption unter Verwendung kohlenstoffhaltiger Adsorbentien birgt eine gewisse Gefahr für die Betriebssicherheit der Adsorptionsanlagen, und zwar wegen der grundsätzlich vorhandenen Entzündungsneigung kohlenstoffhaltiger Adsorbentien. Es sind deshalb zahllose Bemühungen bekannt, kohlenstoffhaltige Adsorbentien durch andere

Adsorbentien, beispielsweise durch Zeolithe, zu substituieren.

Trotz aller Bemühungen auf organische Adsorbentien zur trockenen Abgasreinigung zu verzichten, besitzen diese organischen Adsorbentien allerdings den Vorzug einer außerordentlich hohen Adsorptionsleistung.

Ein Verfahren zur trockenen Reinigung von Abgasen aus thermischen Prozessen unter Verwendung trockener pulverförmiger Sorbentien auf der Basis von Braunkohlenkoks ist beispielsweise aus der DE 199 40 683 A1 bekannt. Die Sorbentien werden pulverförmig so in den Abgasstrom gegeben und von diesem mitgeführt, dass die Adsorption der schädlichen Inhaltsstoffe des Abgases an den in Form einer Flugstaubwolke der im Abgasstrom befindlichen Sorbentien erfolgt. Um Anforderungen hinsichtlich Brand- und Explosionsschutz zu genügen, ist bei dem Verfahren gemäß DE 199 40 683 A1 vorgesehen, dass Zeolithe oder zeolithhaltiges Mineralgestein als oberflächenaktiver Bestandteil in Mischung mit Braunkohlenkoks als Adsorbens Anwendung findet und dass das Mischungsverhältnis zwischen dem Braunkohlenkoks und Zeolith in Abhängigkeit von Art, Zusammensetzung und Menge des im Abgas enthaltenen Prozessstaubs so eingestellt wird, dass eine Inertisierung der Feststoffe gewährleistet ist.

Ein weiteres Verfahren zur Quecksilberabscheidung mit Hilfe von Sorbentien auf Braunkohlebasis ist aus der DE 10 2007 042 297 A1 bekannt. Alternativ zur Verwendung von Braunkohlenkoks als Adsorptionsmittel ist auch die Verwendung von Aktivkohle grundsätzlich für die trockene Abgasreinigung bekannt, beispielsweise aus der DE 40 34 498 A1. Aktivkohle wird aufwändig aus Kokosnussschalen durch Pyrolyse hergestellt und ist daher teuer, so dass im Stand der Technik stets das Bestreben war, den Einsatz von Aktivkohle so sparsam wie möglich zu gestalten.

Der Erfindung liegt die Aufgabe zugrunde, ein Verfahren zur Abscheidung von Quecksilber aus Rauchgasen von Verbrennungsanlagen bereitzustellen, mit
welchem insbesondere auch elementares Quecksilber aus dem Rauchgasstrom ausgehalten werden kann und welches sicher und kostengünstig durchführbar ist. Das Verfahren soll insbesondere unter Brandschutzgesichtspunkten sicher sein.

Der Erfindung liegt weiterhin die Aufgabe zugrunde, ein solches Verfahren bereitzustellen, mit welchem gegenüber dem bekannten Verfahren erhöhte
Abscheidegrade von Quecksilber erzielbar sind.

Die Aufgabe wird gelöst durch die Merkmale des Anspruchs 1. Vorteilhafte Varianten des Verfahrens ergeben sich aus den Unteransprüchen.

Die Erfindung kann dahingehend zusammengefasst werden, dass ein Adsorbens auf der Basis von Kohlenstoff in Form einer wässrigen Suspension in den Rauchgasstrom eingedüst wird und zwar vorzugsweise vor einer nassen
Rauchgaswäsche in den verhältnismäßig trockenen und heißen Rauchgasstrom. Auf diese Art und Weise lässt sich eine Quecksilberemissionsminderung mittels Flugstromadsorption durch kohlenstoffhaltige Adsorbentien erzielen, wobei anders als bei den bekannten Trockenadditivverfahren das oder die Adsorbentien nicht als trockener Staub mittels Trägerluft in den Rauchgasstrom eingeblasen werden, sondern als wässrige Suspension. Das hat insbesondere den Vorzug, dass sicherheitstechnische Probleme bezüglich Lagerung und Einblasung des Adsorbens entfallen.

Bei der Eindüsung der wässrigen Suspension mit dem Adsorbens, die in Gegenstromrichtung oder auch in Gleichstromrichtung des Rauchgasstroms erfolgen kann, werden die entstehenden Suspensionstropfen von dem heißen Rauchgas mitgerissen. Durch den Kontakt der Suspensionstropfen beziehungsweise der nassen Adsorbenspartikel mit dem Rauchgas steigt deren Temperatur zunächst schnell an und bleibt auf dem weiteren Weg über die Reaktionsstrecke dann kurzzeitig durch die Verdampfung des Wassers der Suspension konstant bei circa 100° C. Die Temperatur bleibt solange konstant, wie Flüssigkeit in dem porösen Adsorbens durch Kapillarkräfte an die Partikeloberfläche transportiert werden kann und dort verdampft.

Der Wärmeübergang erfolgt konvektiv vom Rauchgas auf die Suspensionstropfen. Zunächst entsteht der Dampf nur an der Oberfläche und die Wärme strömt alleine durch die an den Adsorbenspartikeln anhaftende prandtlsche Gasgrenzschicht, so dass die Wärmedurchgangszahl der Wärmeübergangszahl gleicht. Bei bereits getrockneten Adsorbenspartikeln entsteht der Dampf im Partikel, beziehungsweise im Poreninneren. Die Wärme muss zunächst eine prandtlsche Gasgrenzschicht durchdringen und anschließend in den
Kapillaren des Adsorbens weitergeleitet werden. Die Verdampfung ist in der
ersten Trocknungsphase nur von den Widerständen der umgegebenen Rauchgasphase abhängig. Erst wenn eine materialabhängige Restfeuchte erreicht wird, steigt die Temperatur der nun getrockneten Adsorbentienpartikel wieder an. Es kann nicht mehr genügend Flüssigkeit an die Oberfläche transportiert werden und der Trocknungsspiegel schreitet in das Innere des Partikels fort. Der Dampf muss an die Partikeloberfläche durch Diffusion gelangen.

Die für die Verdampfung notwendige Wärme muss hauptsächlich durch Wärmeleitung zu dem Trocknungsspiegel transportiert werden. Bei sehr engen Poren, wie Sie beispielsweise bei Aktivkohlen und Aktivkoksen vorzufinden sind, wird die Diffusion durch die Wände behindert und der Diffusionskoeffizient nimmt durch den Porendurchmesser ab. Durch das schnelle Aufheizen und die damit verbundene schlagartige Verdampfung des kapillargebundenen Wassers im Inneren der an der Oberfläche trockenen, sehr kleinen Adsorbentienpartikel kann es in vorteilhafter Weise zu einer Fragmentierung der Partikel unter Vergrößerung der für die Adsorption von Quecksilber zur Verfügung stehenden Oberfläche kommen, wodurch die Adsorptionsleistung signifikant gesteigert wird.

Insbesondere in der Phase direkt nach der Suspensionstropfenbildung und die Aufheizung durch den Kontakt mit dem Rauchgas ist es in vorteilhafter Weise möglich, dass SO₂ (Schwefeldioxid) aus dem Rauchgas (typische SO₂ Gehalte im Rauchgas betragen etwa 1.500 bis 8.000 mg/m³) in die flüssige Phase des
Tropfens übertritt und im weiteren Verlauf durch den im Rauchgas vorhandenen Restsauerstoffgehalt zu H₂SO₄ weiter reagiert, was eine zumindest teilweise Chemisorption des Quecksilbers oder gar eine Oxidation von elementaren Quecksilber ermöglicht. Dadurch findet eine in-situ Sulfatisierung statt. Insbesondere können bereits oxidierte Quecksilberverbindungen, beispielsweise HgCl₂ oder Hg₂Cl₂ in der noch vorhandenen flüssigen Phase gelöst und mit
fortschreitendem Trocknungsgrad immer weiter aufkonzentriert werden, bis sie an den Absorbentienpartikeln als Feststoff ausfallen.

Für die Bindung des nicht oxidierten Quecksilbers ist das vorstehend
beschriebene Verfahren vorteilhaft, weil die Temperatur der Adsorbentienpartikel länger als bei einer trockenen Einblasung unterhalb von 150° C gehalten werden kann, was die Physiosorbtion erleichtert und Reemissionen verringert.

Unter einer Reaktionsstrecke im Sinne der vorliegenden Erfindung ist eine vorgegebene Strecke innerhalb eines Rauchgaskanals der Verbrennungsanlage von der Eindüsung der Suspension bis zu der Aushaltung der dann getrockneten und quecksilberbeladenen Adsorbentienpartikel zu verstehen.

Gemäss der Erfindung ist
vorgesehen, dass als Adsorbens nach Verfahrensschritt a) ein unter Sauerstoffabschluss aktiviertes, kohlenstoffangereichertes Adsorbens auf der Basis von Braunkohle verwendet wird. Besonders bevorzugt wird ein Braunkohlenkoks beziehungsweise Herdofenkoks. Die Verwendung eines unter Sauerstoffabschluss aktivierten, Kohlenstoff angereicherten Adsorbens auf der Basis von Braunkohle hat den Vorzug, dass dieses Adsorbens im Vergleich zu herkömmlichen
Aktivkohlen einen höheren Anteil an Meso- und Makroporen umfasst, die eine leichte Zugänglichkeit der inneren Oberfläche ermöglichen.

Erfindungsgemäss wird das Adsorbens zur Herstellung der Suspensionen nach Verfahrensschritt b) nass aufgemahlen, vorzugsweise auf einen mittleren Korndurchmesser zwischen 10 und 20 µm. Insbesondere bei der Verwendung von Braunkohlenkoks wird die Adsorptivität des Braunkohlenkokses signifikant verbessert, wenn dieser auf einen Korndurchmesser zwischen 10 und 20 µm aufgemahlen wird. Zweckmäßigerweise erfolgt das Einbringen der Suspension nach Verfahrensschritt c) durch Eindüsen in einen Rauchgaskanal der Verbrennungsanlage, vorzugsweise unter Verwendung von über den Querschnitt des Rauchgaskanals verteilt angeordneten Sprühdüsen. Als Sprühdüsen kommen sowohl Einstoffdüsen als auch Zweistoffdüsen in Betracht. Die
Sprühdüsen können auf sogenannten Düsenstöcken verhältnismäßig einfach in den Querschnitt des Rauchgaskanals verbracht werden, so dass eine
gleichmäßige Verteilung der Suspension über den gesamten Querschnitt des Rauchgaskanals erzielt wird.

Die Eindüsung kann vor oder hinter einer Wärmetauscheranordnung zur Wärmeverschiebung in dem Rauchgaskanal vorgesehen sein. Systeme zur Wärmeverschiebung in Rauchgaskanälen werden beispielsweise zur Auskoppelung des Wärmeinhalts der Rauchgase zwecks Kesselspeisewasservorwärmung oder zwecks Verbrennungsluftvorwärmung verwendet.

Die Eindüsung der Suspension ist in Bezug auf etwa vorgesehene Wärmeverschiebesysteme unkritisch.

Ein wesentlicher Gesichtspunkt der vorliegenden Erfindung ist die Verdampfung der Suspension in dem Rauchgaskanal.

Die Suspension kann zwischen 3 und 30 Gew.-% an Feststoff umfassen, vorzugsweise zwischen 5 und 15 Gew.-% Feststoff, weiterhin besonders bevorzugt etwa 10 Gew.-% an Feststoff. Eine vorherige Dotierung des Adsorbens etwa mit Schwefel oder Schwefelsäure ist nicht erforderlich, jedoch durchaus im Rahmen der vorliegenden Erfindung.

Gemäss der Erfindung ist vorgesehen, dass das Verfahren eine nasse Rauchgasentschwefelung umfasst und dass die Einbringung der Suspension gemäß Verfahrensschritt c) in das trockene,
heiße Rauchgas in Strömungsrichtung des Rauchgases vor der Rauchgasentschwefelung erfolgt, bei einer Temperatur des Rauchgases
zwischen 100° C und 220° C, bei der der Rauchgasstrom Wasserdampf
untersättigt ist, so dass das Wasser der Suspension verhältnismäßig schnell verdampfen kann und die zuvor beschriebenen Effekte eintreten. Eine Einbringung der Suspension kann in Strömungsrichtung oder gegen die Strömungsrichtung des Rauchgases erfolgen.

Bei einer weiteren Variante des Verfahrens gemäß der Erfindung ist vorgesehen, dass das Verfahren eine trockene Aushaltung des mit Quecksilber beladenen Adsorbens gemäß Verfahrensschritt d) umfasst, und zwar unter Verwendung wenigstens einer Filtereinrichtung, die ausgewählt ist aus einer Gruppe umfassend Elektrofilter, Fliehkraftabscheider, Gewebefilter, Schlauchfilter, Tuchfilter,

Taschenfilter und Kerzenfilter. Alternativ kann allerdings auch vorgesehen sein, die Suspension in den Rauchgaskanal in Strömungsrichtung des Rauchgases hinter einer dort vorgesehenen Endstaubung beziehungsweise Filtereinrichtung einzugeben, so dass eine nasse Abscheidung des Adsorbens in der nachgeschalteten Rauchgasentschwefelungsanlage erfolgt. In diesem Falle würde das beladene Adsorbens mit der Waschsuspension aus dem Sumpf des Waschbehälters der Rauchgasentschwefelungsanlage ausgetragen. Eine solche Waschsuspension ist eine Suspension umfassend Kalk und/oder Gips. Als Waschsuspension kann beispielsweise eine Kalksteinsuspension vorgesehen sein, die beispielsweise mit dem im Rauchgas beziehungsweise Verbrennungsabgas enthaltenen Schwefeldioxid unter Bildung von CaSO₃ und weitere Oxidation zu CaSO₄ reagiert. Calciumsulfat wird im Allgemeinen als Gips bezeichnet. Die in dem Sumpf des Waschbehälters beziehungsweise in dem Waschstrom
gesammelte Suspension wird sowohl Kalkmilch (CaOH₂ (gelöschter Kalk/Calciumhydroxid)) als auch bereits mit SO₂ reagierter Gips (CaSO₃)
enthalten. Die Waschsuspension wird aus dem Sumpf des Waschbehälters abgezogen und mit einer Umwälzpumpe an den Kopf des Waschbehälters
(oberes Ende) gefördert und dort über mehrere Sprühebenen verrieselt und versprüht. Ein Teil der Waschsuspension wird aus dem Sumpf abgezogen, wobei der Gips mittels wenigstens eines Hydrozyklons eingedickt wird. Der eingedickte Gipsstrom wird im Unterlauf abgezogen und nachfolgend entwässert, beispielsweise mittels Bandfiltern oder Zentrifugen. Die Zyklonabscheidung kann dabei so vorgenommen werden, dass das mit Quecksilber beladene Adsorbens in dem Abwasser der Rauchgasentschwefelungsanlage beziehungsweise des Waschbehälters dispergiert ist. Mit dieser Dispersion beziehungsweise Suspension kann beispielsweise eine Anfeuchtung von aus der Entstaubung des Rauchgases anfallender Asche vorgenommen werden. Auf diese Art und Weise wird das an die Adsorbentien gebundene Quecksilber in die Asche eingebunden zu einem deponierbaren, quecksilberreichen Feststoff.

Bei einer Variante des erfindungsgemäßen Verfahrens kann vorgesehen sein, dass der Suspension vor dem Verfahrensschritt c) Halogenide zugegeben werden, ausgewählt aus einer Gruppe umfassend Jodide, Chloride, Natriumbromid, Calciumbromid und Bromwasserstoff. Auf diese Art und Weise wird eine vorherige Dotierung des kohlenstoffhaltigen Adsorbens erzielt, wodurch die Effektivität der Quecksilberaushaltung weiterhin gesteigert wird, da das Quecksilber durch Chemisorption stärker an die Oberfläche des Adsorbens gebunden wird.

Zweckmäßigerweise erfolgt die Aufmahlung des Adsorbens unter Verwendung einer Kugelmühle insbesondere unter Verwendung einer Rührwerkskugelmühle. Solche Kugelmühlen bestehen aus einem vertikal oder liegend angeordneten, meist zylindrischen Behälter, der zu 70 bis 90 % mit Mahlkörpern aus keramischen Materialien gefüllt ist. Die Mahlgutsuspension wird kontinuierlich durch den Mahlraum gepumpt. Dabei werden die suspendierten Feststoffe durch Prall- und Scherkräfte zwischen den Mahlkörpern zerkleinert und suspendiert beziehungsweise dispergiert.

Die Mahlfeinheit wird durch die Verweilzeit des Mahlgutes in der Mühle bestimmt. Am Mühlenaustrag kann beispielsweise eine Abtrennung der Feinfraktion von der gröberen Fraktion mittels eines geeigneten Trennsystems vorgesehen sein, wobei dann die Grobfraktion wieder in die Mühle rezirkuliert wird.

Besonders geeignet zur Aufmahlung der Adsorbentien hat sich beispielsweise eine sogenannte Scheibenrührwerkskugelmühle erwiesen.

Solche Scheibenrührwerkskugelmühlen sind beispielsweise kommerziell erhältlich von der Firma NETZSCH-Feinmahltechnik GmbH.

Das Mahlergebnis innerhalb der Mühle hängt vom Füllgrad der Mahlkörper, vom Durchmesser der Mahlkörper und von der Masse der Mahlkörper ab.

Die Sicherstellung der gewünschten Mahlfeinheit wird über die Spaltweite einer Trenneinrichtung und über die Größe der Mahlkörper gewählt.

Als Sprühdüsen finden zweckmäßigerweise Einstoffdüsen Anwendung, die die zuvor erwähnte Suspension mit dem zuvor erwähnten Wasseranteil und mit der zuvor erwähnten Mahlfeinheit ohne Weiteres bewältigen können.

Das Verfahren gemäß der Erfindung ist vorteilhafter Weise als Verfahren zur Abscheidung von Quecksilber aus Rauchgasen von Kohlekraftwerken mit einer
nassen Rauchgasentschwefelung vorgesehen. Grundsätzlich kann das Verfahren gemäß der Erfindung weitestgehend auch zur Abscheidung von Quecksilber aus Rauchgasen von Kohlekraftwerken mit einer trockenen Abgasreinigung
Anwendung finden.

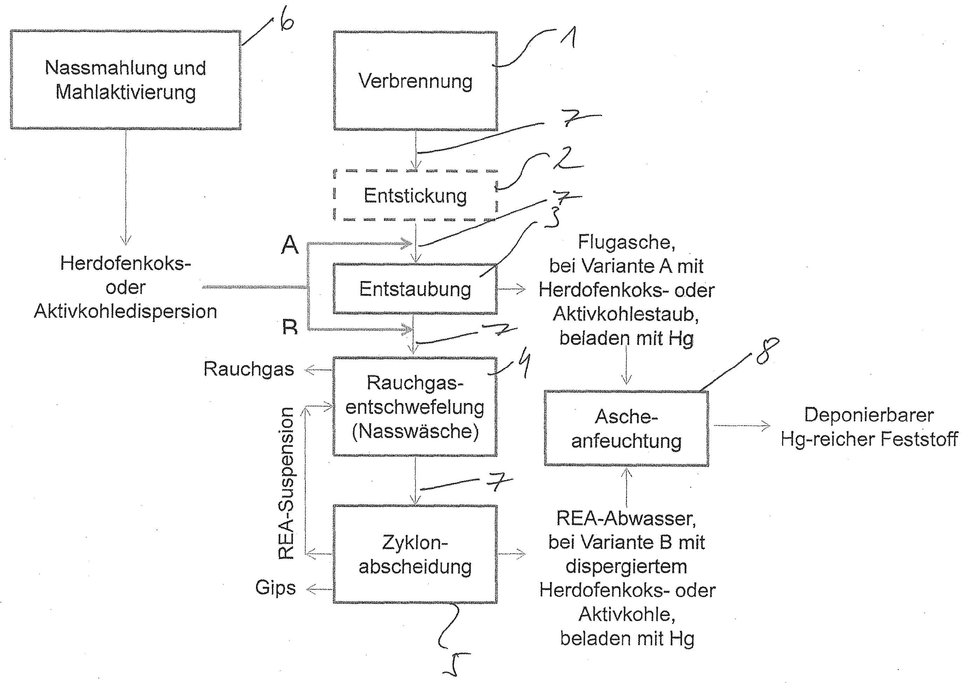

Die Erfindung wird nachstehend anhand eines in der Zeichnung dargestellten Ausführungsbeispiels erläutert.

Das beigefügte Verfahrensfließbild veranschaulicht grob schematisch den
Verfahrensablauf.

Mit 1 ist eine Verbrennungsanlage beispielsweise in Form eines Dampferzeugers eines Kohlekraftwerks oder in Form einer Müllverbrennungsanlage bezeichnet. Der Verbrennungsanlage 1 ist eine Entstickungseinrichtung 2 nachgeschaltet. Die Entstickungseinrichtung 2 ist optional.

In der Verbrennungsanlage 1 werden fossile oder organische Brennstoffe thermisch umgesetzt, und zwar unter Erzeugung von Rauchgas, welches in der Entstickungseinrichtung 2 beispielsweise einer katalytischen Stickstoffreduzierung unterzogen wird.

Nach der Entstickung in der Entstickungseinrichtung 2 wird das Rauchgas einem Elektrofilter 3 zugeführt. In dem Elektrofilter 3 werden in dem Rauchgas mitgeführte Feststoffpartikel als Flugasche abgeschieden. Anstelle eines Elektrofilters können, wie eingangs bereits erwähnt andere Abscheidevorrichtungen
beziehungsweise Entstaubungseinrichtungen vorgesehen sein.

Dem Elektrofilter 3 nachgeschaltet ist eine Rauchgasentschwefelungsanlage 4 (REA), die als übliche Nasswäsche ausgeführt ist. Die
Rauchgasentschwefelungsanlage 4 umfasst wenigstens einen Waschturm mit einem Kopf und einem Sumpf. In dem Waschturm wird eine Waschsuspension im Bereich des Kopfs eingedüst und verrieselt. Das Rauchgas wird dem Waschturm unmittelbar oberhalb des Sumpfs zugeführt. Innerhalb des Waschturms wird das Rauchgas im Gegenstrom zu der verrieselten Waschsuspension geführt. Das Rauchgas verlässt den Waschturm an seinem Kopf, wobei innerhalb des Waschturms auch die üblichen Tropfenabscheidereinbauten und
Rühreinrichtungen vorgesehen sind.

Der Rauchgasentschwefelungsanlage 4 ist eine Zyklonabscheidung 5 nachgeschaltet. Aus dem Sumpf der Rauchgasentschwefelungsanlage 4 wird die Waschsuspension (REA-Suspension) der Zyklonabscheidung 5 zugeführt. Die Zyklonabscheidung 5 kann einen oder mehrere Hydrozyklone umfassen, deren Unterlauf die größeren Gipskristalle anreichert und deren Oberlauf feinere
Partikel, beispielsweise Adsorbenspartikel enthält.

Das Verfahren gemäß der Erfindung umfasst die Bereitstellung von Herdofenkoks, der in einer Nassmahleinrichtung 6 zu einer fließfähigen Suspension vermahlen wird. Die fließfähige Suspension umfasst Wasser und Herdofenkoks, wobei beispielsweise der Herdofenkoks etwa 10 Gew.-% der fließfähigen Suspension ausmachen kann.

Die Herdofenkokssuspension (wahlweise auch Aktivkohlesuspension) wird nun mittels nicht dargestellter Düsenstöcke in einem nur andeutungsweise
dargestellten Rauchgaskanal 7 der Verbrennungsanlage 1 eingedüst, und zwar innerhalb eines Temperaturfensters des Rauchgases zwischen 100° C und
220° C.

In dem beigefügten Fließbild sind zwei Varianten der Einbringung der
Wasser/Adsorbens-Suspension in den Rauchgaskanal 7 dargestellt, wobei gemäß Variante A die Einbringung in den Rauchgaskanal 7 unmittelbar vor der
Entstaubungseinrichtung beziehungsweise vor dem Elektrofilter 3 erfolgt und nach der Variante B die Einbringung der Wasser/Adsorbens-Suspension unmittelbar hinter der Entstaubungseinrichtung beziehungsweise dem Elektrofilter 3 und vor der Rauchgasentschwefelungsanlage 4 erfolgt. Unmittelbar bedeutet in diesem Zusammenhang, dass eine vorgegebene Reaktionsstrecke zwischen der Stelle der Einbringung in den Rauchgaskanal 7 und dem Elektrofilter 3 vorgesehen ist, die eine hinreichende Beladung des Adsorbens ermöglicht.

Bei Variante A wird das mit Quecksilber beladene Adsorbens in dem Elektrofilter 3 ausgehalten beziehungsweise abgeschieden und mit der ebenfalls
abgeschiedenen Flugasche einer Ascheanfeuchtung 8 zugeführt. Auf dieser Art und Weise wird das beladene Adsorbens in die Flugasche eingebunden und als deponierbarer, quecksilberreicher Feststoff aus der Ascheanfeuchtung 8 abgezogen.

Bei Variante B des Verfahrens gelangt das mit Quecksilber beladene Adsorbens mit dem Rauchgas in die Rauchgasentschwefelungsanlage 4 und wird dort in der Waschsuspension (REA-Suspension) aufgenommen. Aus dem Sumpf der Rauchgasentschwefelungsanlage 4 wird sodann die Waschsuspension, die sowohl den Herdofenkoks als Adsorbens als auch Gips umfasst, der Zyklonabscheidung 5 zugeführt. Im Unterlauf der Zyklonabscheidung 5 werden die Gipskristalle angereichert, der Oberlauf enthält die feineren Adsorbenspartikel, die mit Quecksilber beladen sind. Die mit Quecksilber beladene Herdofenkokssuspension kann einer chemischen Nachbehandlung unterzogen werden, wobei dann das an das Adsorbens gebundene Quecksilber gefällt werden kann.

Alternativ kann das Abwasser umfassend die Herdofenkokssuspension der
Ascheanfeuchtung 8 zugeführt werden, so dass das Adsorbens in die Flugasche eingebunden wird und ebenfalls als deponierbarer, quecksilberreicher Feststoff mit der Flugasche ausgetragen wird.

### Bezugszeichenliste

- 1: Verbrennungsanlage
- 2: Entstickungseinrichtung
- 3: Elektrofilter
- 4: Rauchgasentschwefelungsanlage
- 5: Zyklonabscheidung
- 6: Nassmahleinrichtung
- 7: Rauchgaskanal
- 8: Ascheanfeuchtung

## Patentansprüche

1. Verfahren zur Abscheidung von Quecksilber aus Rauchgasen von Verbrennungsanlagen (1), umfassend folgende Verfahrensschritte:
a) Bereitstellen eines Adsorbens ausgewählt aus einer Gruppe umfassend Aktivkohle, Aktivkoks, Molekularsiebe, Kohlenstoffmolekularsiebe und Mischungen der vorgenannten Adsorbentien,
b) Herstellen einer wässrigen Suspension mit dem Adsorbens,
c) Einbringen der Suspension in einen Rauchgasstrom der Verbrennungsanlage des Rauchgases und Beladen des Adsorbens mit Quecksilber über eine vorgegebene Reaktionsstrecke,
d) Aushalten des mit Quecksilber beladenen Adsorbens aus dem Rauchgasstrom mittels eines oder mehrerer Abscheideverfahren ausgewählt aus einer Gruppe umfassend eine trockene oder
eine nasse Abgasreinigung und
e) Deponieren oder Regenieren des mit Quecksilber beladenen Adsorbens,
wobei das Verfahren eine nasse Rauchgasentschwefelung umfasst, wobei als Adsorbens nach Verfahrensschritt a) ein unter Sauerstoffabschluss aktiviertes, kohlenstoffangereichertes Adsorbens auf der Basis von Braunkohle verwendet wird, wobei das Adsorbens zur Herstellung der Suspension nach Verfahrensschritt b) nass aufgemahlen wird, und wobei die Einbringung der Suspension gemäß Verfahrenschritt c) in die trockene, Wasserdampf untersättigte Gasphase des Rauchgases, nämlich in das trockene, heiße Rauchgas in Strömungsrichtung des Rauchgases vor der Rauchgasentschwefelung erfolgt, bei einer Temperatur des Rauchgases zwischen 100° C und 220 ° C.

2. Verfahren nach Anspruch 1, **dadurch gekennzeichnet, , dass** das Adsorbens zur Herstellung der Suspension nach Verfahrensschrit b) auf einen mittleren Korndurchmesser zwischen 10 und 20 µm nass aufgemahlen wird.

3. Verfahren nach einem der Ansprüche 1 oder 2, **dadurch gekennzeichnet, dass** das Einbringen der Suspension nach Verfahrensschritt c) durch Eindüsen in einen Rauchgaskanal (7) der Verbrennungsanlage (1), unter Verwendung von über den Querschnitt des Rauchgaskanals (7) verteilt angeordneten Sprühdüsen erfolgt.

4. Verfahren nach einem der Ansprüche 1 bis 3, **dadurch gekennzeichnet, dass** die Suspension zwischen 3 und 30 Gew.-% Feststoff, vorzugsweise zwischen 5 und 15 Gew.-% Feststoff umfasst.

5. Verfahren nach einem der Ansprüche 1 bis 4, **dadurch gekennzeichnet, dass** dieses eine trockene Aushaltung des mit Quecksilber beladenen Adsorbens gemäß Verfahrensschritt d) umfasst unter Verwendung wenigstens einer Filtereinrichtung ausgewählt aus einer Gruppe umfassend Elektrofilter, Fliehkraftabscheider, Gewebefilter, Schlauchfilter, Tuchfilter, Taschenfilter und Kerzenfilter.

6. Verfahren nach einem der Ansprüche 1 bis 5, **dadurch gekennzeichnet, dass** der Suspension vor dem Verfahrensschritt c) Halogenide zugegeben werden, ausgewählt aus einer Gruppe umfassend Jodide, Chloride, Natriumbromid, Calciumbromid und Bromwasserstoff.

7. Verfahren nach einem der Ansprüche 3 bis 6, **dadurch gekennzeichnet, dass** die Aufmahlung des Adsorbens unter Verwendung einer Kugelmühle, insbesondere unter Verwendung einer Rührwerkskugelmühle erfolgt.

8. Verfahren nach Anspruch 3, **dadurch gekennzeichnet, dass** als Sprühdüsen Einstoffdüsen Anwendung finden.

9. Verfahren nach einem der Ansprüche 1 bis 8, als Verfahren zur Abscheidung von Quecksilber aus Rauchgasen von Kohlekraftwerken mit einer nassen Rauchgasentschwefelungsanlage (4).

## Claims

1. Method for separating mercury from flue gases from incinerators (1), comprising the following method steps:
a) providing an adsorbent selected from a group comprising activated carbon, activated coke, molecular sieves, carbon molecular sieves and mixtures of the aforementioned adsorbents,
b) producing an aqueous suspension comprising the adsorbent,
c) introducing the suspension into a flue gas stream of the incinerator of the flue gas and loading the adsorbent with mercury over a predefined reaction section,
d) keeping the adsorbent that is loaded with mercury out of the flue gas stream by means of one or more separation processes selected from a group comprising dry or wet waste-gas purification, and
e) disposing of or recycling the adsorbent that is loaded with mercury,
wherein the method comprises wet flue-gas desulfurization, wherein a carbon-enriched, lignite-based adsorbent activated under exclusion of oxygen is used as the adsorbent according to method step a), wherein the adsorbent is wet-milled in order to produce the suspension according to method step b), and wherein the suspension is introduced in accordance with method step c) into the dry, water vapor-undersaturated gas phase of the flue gas, specifically into the dry, hot flue gas, in the flow direction of the flue gas, upstream of the flue-gas desulfurization, at a flue gas temperature of between 100°C and 220°C.

2. Method according to claim 1, **characterized in that** the adsorbent is wet-milled to an average grain diameter of between 10 and 20 µm in order to produce the suspension according to method step b).

3. Method according to either of claims 1 or 2, **characterized in that** the suspension is introduced according to method step c) by means of injecting into a flue gas channel (7) of the incinerator (1) using spray nozzles that are distributed over the cross section of the flue gas channel (7).

4. Method according to any of claims 1 to 3, **characterized in that** the suspension comprises between 3 and 30 wt.% solid material, preferably between 5 and 15 wt.% solid material.

5. Method according to any of claims 1 to 4, **characterized in that** said method includes dry keeping-out of the adsorbent loaded with mercury in accordance with method step d) using at least one filter device selected from a group comprising electrostatic precipitators, centrifugal separators, fabric filters, baghouse filters, cloth filters, pocket filters and candle filters.

6. Method according to any of claims 1 to 5, **characterized in that** halides selected from a group comprising iodides, chlorides, sodium bromide, calcium bromide and hydrogen bromide are added to the suspension before method step c).

7. Method according to any of claims 3 to 6, **characterized in that** the adsorbent is milled using a ball mill, in particular using an attritor.

8. Method according to claim 3, **characterized in that** single-component nozzles are used as spray nozzles.

9. Method according to any of claims 1 to 8 as a method for separating mercury from flue gases from coal-fired power stations having a wet flue-gas desulfurization plant (4).

## Revendications

1. Procédé de séparation du mercure des gaz de combustion d'installations d'incinération (1), comprenant les étapes de procédé suivantes :
a) la fourniture d'un adsorbant choisi dans un groupe comprenant le charbon activé, le coke actif, les tamis moléculaires, les tamis moléculaires de carbone et les mélanges des adsorbants précités,
b) la préparation d'une suspension aqueuse avec l'adsorbant,
c) l'introduction de la suspension dans un flux de gaz de combustion d'installations d'incinération et le chargement de l'adsorbant avec du mercure sur une distance de réaction donnée,
d) le maintien de l'adsorbant chargé de mercure à partir du flux de gaz de combustion au moyen d'un ou de plusieurs procédé(s) de séparation choisi(s) dans un groupe comprenant l'épuration des gaz d'échappement secs ou humides, et
e) la mise en décharge ou régénération de l'adsorbant chargé de mercure,
dans lequel le procédé comprend une désulfuration humide des gaz de combustion, dans lequel l'adsorbant utilisé comme étape de procédé a) est un adsorbant enrichi en carbone à base de lignite qui est activé sous désoxygénation et est activé, l'adsorbant étant broyé pour préparer la suspension comme étape de procédé b), et dans laquelle l'introduction de la suspension a lieu selon l'étape de procédé c) dans la phase gazeuse sèche, sous-saturée en vapeur des gaz de combustion, c'est-à-dire dans les gaz de combustion chauds et secs dans la direction d'écoulement de combustion avant la désulfuration des gaz de combustion, à une température des gaz de combustion comprise entre 100 °C et 220 °C.

2. Procédé selon la revendication 1, **caractérisé en ce que** l'adsorbant pour la préparation de la suspension selon l'étape b) du procédé est broyé par voie humide avec un diamètre moyen de grain compris entre 10 et 20 µm.

3. Procédé selon l'une des revendications 1 ou 2, **caractérisé en ce que** l'introduction de la suspension selon l'étape de procédé c) s'effectue par injection dans un conduit de fumées (7) de l'installation de combustion (1) en utilisant des buses de pulvérisation disposées sur la section transversale du conduit de fumées (7).

4. Procédé selon l'une des revendications 1 à 3, **caractérisé en ce que** la suspension comprend entre 3 et 30 % de solide, de préférence entre 5 et 15 % de solide.

5. Procédé selon l'une des revendications 1 à 4 **caractérisé en ce qu'**il comprend la rétention à sec de l'adsorbant chargé de mercure selon l'étape d) en utilisant au moins un dispositif filtrant choisi dans un groupe comprenant un précipitateur électrostatique, un séparateur centrifuge, un filtre à tissu, un filtre à poches, un filtre en toile, un filtre à poches et un filtre bougie.

6. Procédé selon l'une des revendications 1 à 5, **caractérisé en ce que** des halogénures choisis dans un groupe comprenant les iodures, les chlorures, le bromure de sodium, le bromure de calcium et le bromure d'hydrogène sont ajoutés à la suspension avant l'étape c).

7. Procédé selon l'une des revendications 3 à 6, **caractérisé en ce que** l'adsorbant est broyé à l'aide d'un broyeur à boulets, en particulier d'un broyeur à billes.

8. Procédé selon la revendication 3, **caractérisé en ce que** l'on utilise comme buses de pulvérisation des buses monofluides.

9. Procédé selon l'une des revendications 1 à 8, en tant que procédé de séparation du mercure des gaz de combustion de centrales électriques au charbon avec une installation de désulfuration humide des gaz de combustion (4).
